# EUROPEAN PATENT APPLICATION

(11) **EP 1 111 253 A2**
(43) Date of publication of application: **27.06.2001**
(21) Application number: 00311509.4
(22) Date of filing: 20.12.2000
(51) Int. Cl.: F16B 7/18

(54) **Fixing for conduit coupling**

(30) Priority: 22.12.1999 GB 9930258
(71) Applicant: Electrix International Limited, Bishop Auckland, County Durham DL14 6XP (GB)
(72) Inventor: Thompson, Malcolm, Weardale, Co Durham DL13 3HE (GB)
(74) Representative: Vinsome, Rex Martin

(57) **Abstract**

A conduit piece 10 has inside it a coupling 12. Conduit piece 10 has a circular hole 14 having a chamfered edge 16, and the coupling 12 has a hole 18. Inserted through holes 14 and 18 is fixing 20 which has a head 22 and body 24 The head comprises a flat outer surface 26 and a chamfered edge 28, the body 24 having a helical thread 30 In use, fixing 20 is inserted through the holes 14 and 18 in conduit 10 and coupling 12, such that chamfered edge 16 of hole 14 engages with chamfered edge 28 of fixing 20 The flat surface 26 of fixing 20 forms a substantially continuous surface with the outer surface of conduit 10, thereby providing a hygienic and easy to clean fixing. Fixing 20 is secured into position by threaded nut 32.

## Description

The present invention relates to fixings, and relates particularly, but not exclusively, to fixings used in the joining of sections of conduit whele an intermediate coupling is used.

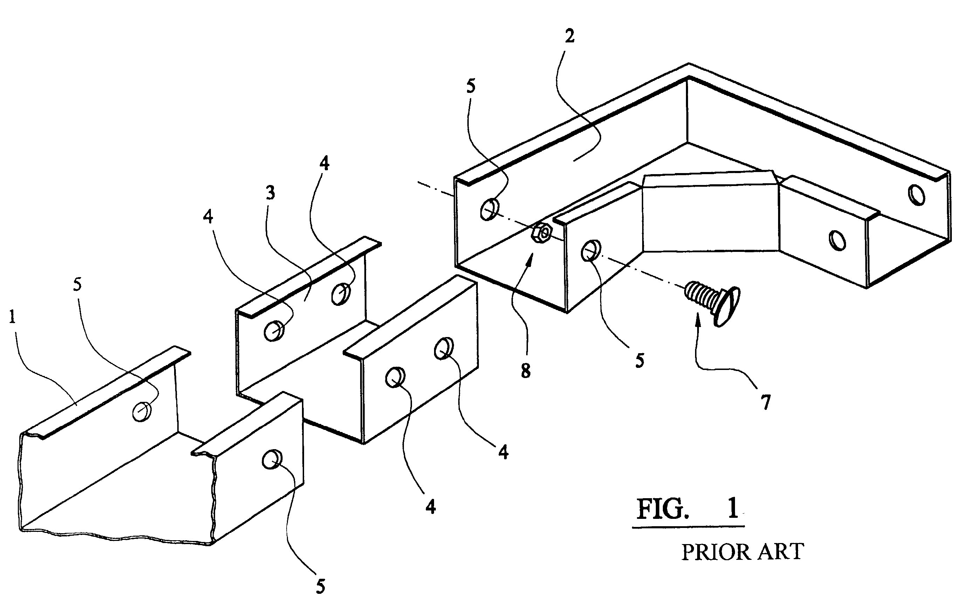

Trunking or conduit systems are commonly used to protect electrical wiring or to transport powdered or granular materials. When used within the food, beverage or pharmaceutical industries hygiene is of particular significance. Conduit systems which are easy to clean therefore provide significant advantages with reduced risk to hygiene and more efficient and/or more economical cleaning. Figure 1 shows an example of such a conduit system incorporating a prior art fixing means. A first section of conduit 1 is connected to a second piece of conduit 2 (in this example a corner junction piece) by a coupling 3. Coupling 3 has four holes 4 which in pairs correspond with holes 5 in conduit sections 1 and 2. Conduit sections 1 and 2 and coupling 3 are fixed into position by a fixing which comprises a slot headed bolt 6 and hexagonal nut 7.

This type of fixing as shown in the above example of prior art suffers from the considerable disadvantage of providing an obstacle to cleaning, thereby potentially allowing build up of dirt, which has an associated risk to hygiene.

It is also a requirement of a trunking system to produce an aesthetically pleasing finish, since a significant part of the purpose of a trunking system is to cover the wiring it carries. This type of fixing is somewhat aesthetically unpleasing.

Preferred embodiments of the present invention seek to overcome the above disadvantages of the prior art.

According to the present invention there is provided a fixing for joining a section of conduit to a coupling, for use in connecting adjacent sections of conduit, the fixing comprising:
a) a head having a substantially planar surface wherein the head is adapted to engage an aperture in said section of conduit and/or said coupling without passing through said aperture, and said substantially planar surface is adapted to form a substantially continuous surface with said length of conduit and/or said coupling; and
0b) a body extending from said head and adapted to extend through said aperture and to receive retaining means for preventing removal of the fixing from said aperture.

By providing a fixing having a head which forms a substantially continuous surface with the length of conduit and/or the coupling, this provides the advantage that the continuous surface formed between the fixing and the section of conduit or coupling is easy to clean, thereby reducing the risk to hygiene. Furthermore, once the risk to hygiene has been reduced the time and care required to clean the trunking to a specific hygiene standard can also be reduced. The fixing also produces an overall aesthetically pleasing trunking system.

In a preferred embodiment a transverse cross-section of the head is non circular.

In another preferred embodiment a transverse cross-section of the head is substantially square.

By providing a non circular head to the fixing the advantage is provided that when inserted into an appropriately shaped chamfered hole in the coupling or conduit section, the head is not free to rotate as a retaining means such as a nut is tightened on the threaded fixing.

In a preferred embodiment said body is threaded to receive a retaining means in the form of a threaded nut.

In another preferred embodiment said body is adapted to receive a retaining means in the form of a retaining clip.

A preferred embodiment of the invention will now be described, by way of example only and not in any limitative sense, with reference to the accompanying drawings, in which:-
Figure 1 is a perspective view of a prior art fixing;
Figure 2 is an end view of an assembled fixing embodying the present invention;
Figure 3 is a perspective view of an end piece of conduit into which the fixing of Fig. 2 is to be secured;
Figure 4 is a side view of the fixing of Fig. 2; and
Figure 5 is a perspective view of the fixing of Figure 4.

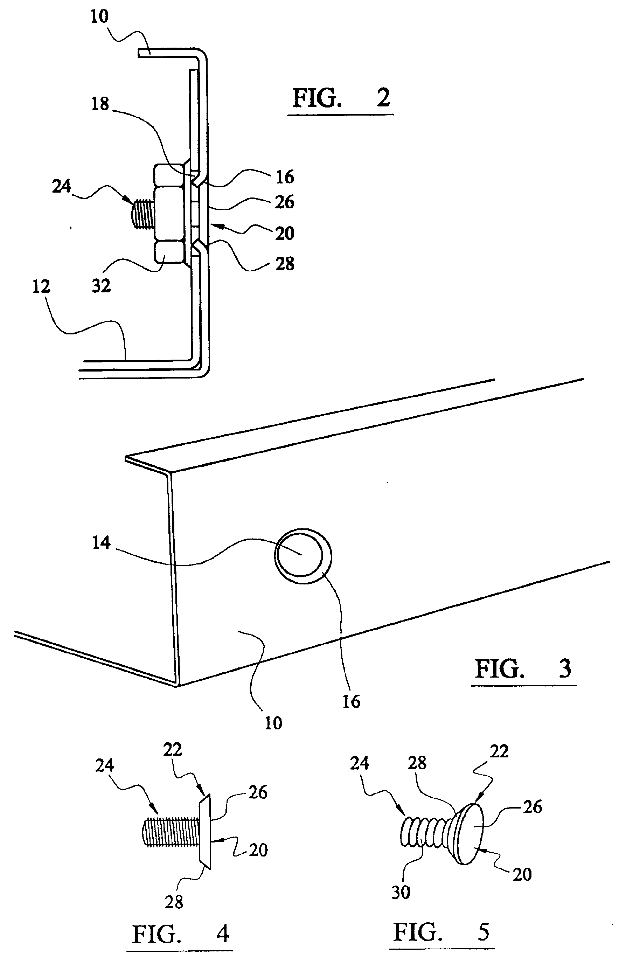

Referring to Figure 2, a conduit piece 10 has inside it a coupling 12. Conduit piece 10 has a circular hole 14 having a chamfered edge 16, and the coupling 12 has a hole 18.

Inserted through holes 14 and 18 is fixing 20 which has a head 22 and body 24. The head comprises a flat outer surface 26 and a chamfered edge 28, the body 24 having a helical thread 30.

In use, fixing 20 is inserted through the holes 14 and 18 in conduit 10 and coupling 12, such that chamfered edge 16 of hole 14 engages with chamfered edge 28 of fixing 20. The flat surface 26 of fixing 20 forms a substantially continuous surface with the outer surface of conduit 10, thereby providing a hygienic and easy to clean fixing. Fixing 20 is secured into position by threaded nut 32.

It will be appreciated by persons skilled in the art that the above embodiment has been described by way of example only, and not in any limitative sense, and that various alterations and modifications are possible without departure from the scope of the invention as defined by the appended claims For example fixing 20 can be replaced with a similar fixing having the same shaped lead and a non-threaded body. Threaded nut 32 could therefore be replaced by a retaining clip.

## Claims

1. A fixing for joining a section of conduit to a coupling, for use in connecting adjacent sections of conduit, the fixing comprising:
a) a head having a substantially planar surface wherein the head is adapted to engage an aperture in said section of conduit and/or said coupling without passing through said aperture, and said substantially planar surface is adapted to form a substantially continuous surface with said length of conduit and/or said coupling; and
b) a body extending from said head and adapted to extend through said aperture and to receive retaining means for preventing removal of the fixing from said aperture.

2. A fixing according to claim 1 wherein a transverse cross-section of the head is non circular.

3. A fixing according to claim 2 wherein a transverse cross-section of the head is substantially square.

4. A fixing according to any of the preceding claims wherein said body is threaded to receive a retaining means in the form of a threaded nut.

5. A fixing according to any one of claims 1 to 3 wherein said body is adapted to receive a retaining means in the form of a retaining clip.

6. A fixing for joining a section of conduit to a coupling, for use in connecting adjacent sections of conduit, the fixing substantially as hereinbefore described with reference to Figures 2 to 4 of the accompanying drawings.
